# EUROPEAN PATENT SPECIFICATION

(11) **EP 1 104 123 B1**
(45) Date of publication and mention of the grant of the patent: **23.04.2008**
(21) Application number: 00310420.5
(22) Date of filing: 23.11.2000
(51) Int. Cl.: H04B 7/185

(54) **On-board processor for satellite communications**
An bord Prozessor für Satelliten Kommunikation
Processeur embarqué pour communications par satellite

(30) Priority: 29.11.1999 EP 99402970; 21.12.1999 US 469140
(43) Date of publication of application: 30.05.2001
(73) Proprietor: Nortel Networks Limited, St Laurent, Québec H4S 2A9 (CA); Astrium SAS, 78140 Velizy-Villacoublay (FR); Advantech Satellite Networks Inc., Dorval, QC H9P 1G1 (CA)
(72) Inventor: Defever, Sophie, 31000 Toulouse (FR); Alberty, Eric, 31130 Fonsegrives (FR); Franchini, Michel, 31500 Toulouse (FR); Cable, Julian, Hertfordshire CM23 5AP (GB); Thomasson, Laurent, 31500 Toulouse (FR); Takats,Peter, Quebec J7V 7P2 (CA)
(74) Representative: Rooney, Paul Blaise

(56) References cited:
- EP-A- 0 238 000
- CRAIG A D ET AL: "DIGITAL SIGNAL PROCESSING IN COMMUNICATIONS SATELLITE PAYLOADS" ELECTRONICS AND COMMUNICATION ENGINEERING JOURNAL,GB,INSTITUTION OF ELECTRICAL ENGINEERS, LONDON, vol. 4, no. 3, 1 June 1992 (1992-06-01), pages 107-114, XP000307314 ISSN: 0954-0695
- BELLA L ET AL: "ROLE OF ISDN SIGNALING FOR A SATELLITE SYSTEM WITH ON-BOARD PROCESSING" IEEE JOURNAL ON SELECTED AREAS IN COMMUNICATIONS,US,IEEE INC. NEW YORK, vol. 10, no. 6, 1 August 1992 (1992-08-01), pages 1066-1080, XP000296622 ISSN: 0733-8716
- LIKHTENVAL'D V V ET AL: "THE ON-BOARD TRANSPONDER SYSTEM FOR THE 14/11 GHZ FIXED SATELLITE COMMUNICATIONS SYSTEM" TELECOMMUNICATIONS AND RADIO ENGINEERING,US,BEGELL HOUSE, INC., NEW YORK, NY, vol. 49, no. 10, 1 October 1995 (1995-10-01), pages 9-15, XP000592564 ISSN: 0040-2508

## Description

The present invention relates to geostationary satellite based networks used to exchange between Terrestrial Terminals information with various bandwidths, data rates and delay requirements, such as multimedia broadband services.

Two categories of Terrestrial Terminals may be considered. The first category, also called User Terminals is the user access point to a satellite based network as above. Various classes of User Terminals may be used may be used in order to meet different service requirements. The second category of Terrestrial Terminals, also called Gateways, is the access point at the public/private network side to a satellite-based network as above. Various classes of Gateways may be used in order to meet different service requirements.

The present invention addresses more particularly systems using one or more geostationary satellites having typically between five and seventy beams. The number and size of beams on the uplink and downlink directions may be different.

An architecture currently adopted by network operators to offer broadband and multimedia services to supplement and enhance their existing service offerings is based on what is called a 'bent pipe' system of geostationary satellite-based networks where a call is made to a satellite from a point on the earth and returned from the satellite to a further point on the earth. An example of such a system uses Ka-band (18 - 37 Ghz) on the return path and Digital Video Broadcast (DVB) on the Ku-band (10.9 - 17 GHZ.) forward path. The open and neutral nature of this architecture provides bandwidth-on-demand and broadband access that are both attractive and ubiquitous when compared with terrestrial solutions. However, the current architecture has the following limitations:
(1) Typically only one hub or a handful of remote gateways are used to interconnect customers equipped with User Terminals to the public and/or private terrestrial networks. Due to this system characteristic, such an architecture is appropriate for local traffic, but requires terrestrial transmission of traffic when the traffic becomes global. The necessity to use terrestrial networks such as leased lines or optical fibres significantly increases the cost of operations and makes a satellite solution less attractive for telecommunications operators;
(2) The current architecture does not allow for direct User Terminal to User Terminal connectivity through one satellite hop, also called mesh connectivity. This system characteristic limits the use of the system since User Terminal to User Terminal connectivity becomes very costly in terms of satellite resource usage (since two hops are required) and this can only be used for applications which are not delay-sensitive.

The advances in satellite on-board processing technologies will open up new avenues for the evolution of broadband satellite systems. The long-term objective of providing full connectivity at a 'packet' granularity can be attained by the use of an on-board packet switch/cell switch. However the high technological risk of such an alternative is not compatible with the time scale envisaged for providing the next generation of broadband satellite systems. Hence there is a need for intermediate solutions that trade off features for risks. A first alternative architecture as shown in Figure 1 and called 'West Block I' and described in French Patent Application No FR 19980015708 and EP-A-1 009 109 (MATRA) was introduced to efficiently overcome the limitation (1) above, by offering a first level of on-board connectivity. The 'West Block I' concept relies on the following principles for connectivity implementation:
**Return link** (User Terminal to Gateway): the on -board processor allows carrier based switching. A given group of contiguous return uplink carriers in a spot beam number *i* can be switched to a Gateway downlink *j*. The routing function on-board the satellite is based on digital processing of the uplink MF/TDMA signals, without demodulation. This technique implies a drastic simplification of the return payload with respect to on-board switching, at the expense of a modest degradation of the overall return link budget.
**Forward link** (Gateway to User Terminal): a continuous TDM stream made of time frames within superframes, for example DVB-based, is generally used. It comes from a Gateway number *k* and is demodulated by the satellite payload. Depending on the air interface, the TDM stream may have to be partially or fully decoded. An on-board TDM router has the capability of switching each frame to the right spot beam according to its position within the superframe. This architecture allows a simplification of the payload with respect to a switch payload since no buffering is involved.

This approach allows for various routing strategies. For example, using least cost routing (i.e., a direct connection between a user beam *i* and a gateway *j* irrespective of its location) allows significantly reduced dependence of terrestrial networks for transport of non-local traffic while minimizing the risks associated with on-board processing. The granularity of switching on the return link is a group of carriers and on the forward link is a frame.

However, this system architecture does not provide the mesh connectivity capability in a better way than the initial 'bent pipe' system referred to above. This may not be satisfactory to address some customer needs.

The intention of the present invention is to build onto the 'West Block I' architecture described in FR98,15078, to improve the User Terminal to User Terminal connectivity described therein, while keeping the technological risk at a manageable level.

According to the present invention there is provided a geostationary satellite communications system comprising a space segment having a least one satellite having a multi-beam telecommunications payload and a terrestrial segment comprising access gateways, each one being in the coverage of a beam or group of beams and user terminals having means connecting with the satellite payload, the payload comprising;
on an outward route, from a gateway to a user terminal, a routing device operating on a frame by frame basis for messages sent in time-division multiplex;
on a return route, from a user terminal to a gateway, a routing device, functioning on groups of carriers comprised in the same beam;
characterised in that the payload has three chains, wherein;
a first chain on the return route has a carrier router, routing on a group of carriers, signals multiplexed in frequency and time (MF/TDMA);
a second chain on the outward route has a frame router routing on a frame basis signals multiplexed in time (TDM);
a third chain for connecting User Terminals to User Terminals through a single satellite loop, a processing section receiving signals multiplexed in frequency and time (MF/TDMA), generating signals multiplexed in time (TDM) and routing these signals to Chain 2.

The present invention will now be described, by way of example, with reference to the accompanying drawings, in which:

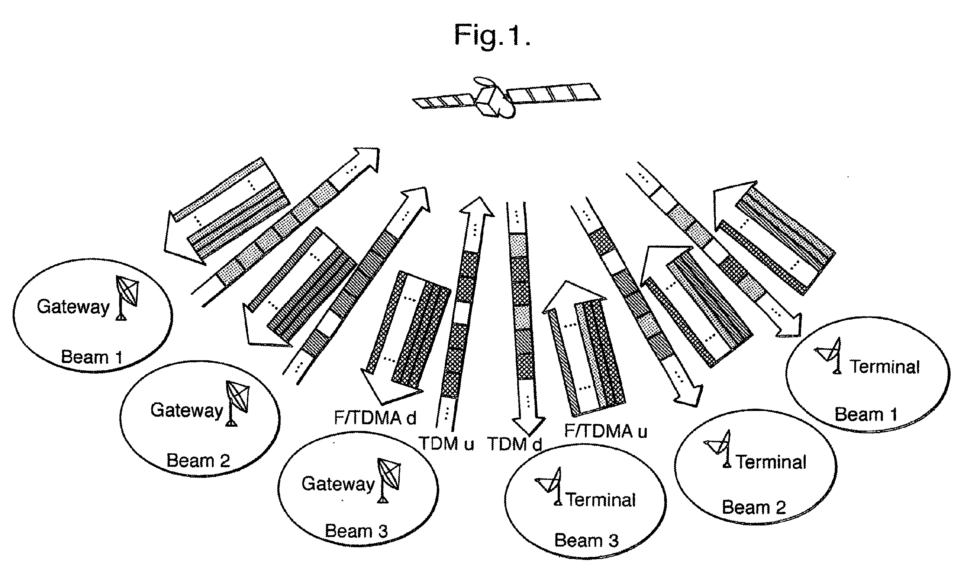

Figure 1 Illustrates the Carrier/Frame Switching Architecture of West Block I;
Figure 2 illustrates one embodiment of the present invention; and
Figure 3 illustrates a second embodiment of the present invention.

The present invention integrates two complementary on-board processing concepts, that of 'West Block I' and a mesh connectivity processor to deliver a solution for the mid-term next generation multimedia satellite systems. The main features of this concept are to provide at the same time, flexible beam connectivity to offer various routing strategies, including Least Cost Routing, as well as limited mesh connectivity allowing User Terminals to communicate directly for peer to peer static rate applications with a simple and low cost User Terminal comprising only one receiver chain.

The present invention will offer a mesh connectivity limited in two ways, firstly by the capacity available for it (typically less than 50% of the total capacity) and secondly by the type of applications being supported. However the concept can easily be generalised to non-static-rate applications by the use of a bandwidth on demand processor in each home gateway. The number of direct User Terminal to User Terminal communications will be limited to the appropriate number through Call Admission Control.

The concept allows a community of User Terminals included within the footprint of a single satellite beam to receive a single TDM-DVB continuous stream transporting information from communications with a mix of gateways and with other User Terminals (mesh Communications). These two types of communications may occur either at the same time or separately. The community of User Terminals may include all or a part only of User Terminals installed within a same satellite beam.

The complete architecture is a geostationary satellite-based network including at least one satellite with a multi-beam telecommunication payload, a ground segment including gateways geographically distributed over the satellite coverage and User Terminals. The telecommunications payload has three telecommunications chains with the following characteristics:
Chain 1: On the return link, from users to gateways a module which is the 'West block I' carrier router as specified in FR 98 15078, routing on a frequency bank (i.e., a group of carriers) basis signals multiplexed in frequency and time (MF/TDMA) as in FR 98 15078;
Chain 2: On the forward link, from gateways to users, a module which is the 'West Block I' frame router as specified in FR 98 15078, routing on a frame basis signals multiplexed in time (TDM) as in FR 98 15078;
Chain 3: for mesh communications, that is for connecting User Terminals to User Terminals through a single satellite loop, a processing section receiving signals multiplexed in frequency and time (MF/TDMA), generating signals multiplexed in time (TDM) and routing these signals to Chain 2.

These three chains may be combined in various configurations. For Chain 3, TDM signals at its output are used as inputs by Chain 2 and are combined with information coming from the forward path received from Gateways.

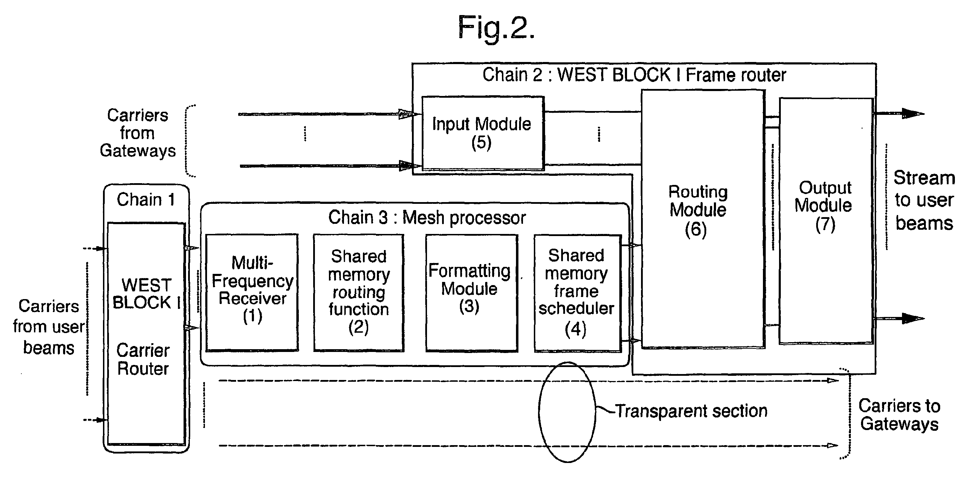

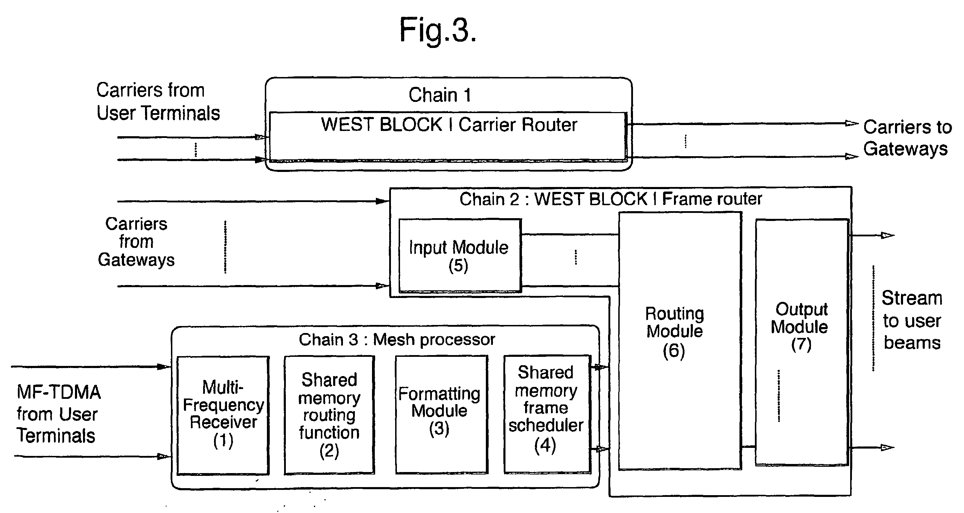

Figures 2 and 3 illustrate two possible configurations for the processor component of the payload. Depending on the payload configuration, Figure 2 or 3, the group of MF/TDMA carriers at the input of Chain 3 may have been initially re-arranged by the Chain 1 (Figure 2), or may directly come from User Terminals (Figure 3). The selection of one or the other configuration depends on the trade off between payload complexity and resource management efficiency. Indeed, Figure 2 allows more efficient sharing of the frequency spectrum available for uplink user communications between mesh and access communications, at the expense of an increase in the number of Chain 1 input and output ports. It is possible to reduce this number of Chain 1 input and output ports by splitting the available frequency spectrum between mesh and access communications as illustrated in Figure 3.
The Chain 3 is further described here below:
A group of multi-frequency receivers (1), operating according to an MF-TDMA shared access scheme, demultiplexes, demodulates and decodes MF/TDMA bursts and transmits them to a Shared Memory Routing function (2). One MF/TDMA burst may include one or several cells, these cells being typically ATM cells. The content of one MF/TDMA burst is called here below a cell packet.

The Shared Memory Routing function (2), located after the group of multi-frequency receivers (1) and typically before the Formatting Module (3), is used to re-arrange incoming cell packets so that they occupy the right time slots allowing them to access the required destination beams after the Chain 2 processing.

If required by the system to have consistent data rates between inputs of the Shared Memory Routing function (2) and inputs of the Routing Module (6) of the Chain 2, the Shared Memory Routing function (2) may have to insert null packets.

The invention can use two possible methods for routing the packets. In a first method a routing label embedded in the packet header and a routing table are used to route the packets. The routing table is communicated to the satellite via some means, for example Tracking, Telemetry and Control (TT&C) which maps packet routing labels to queues. In a second method, a Burst/Cell Time Plan is used to route packets in specific time/frequency slots to specific queues. The Burst/Cell Time Plan is communicated to the satellite via some means, for example TT&C which maps TDMA frequency/frame offset tags to queues.

A Formatting Module (3) located after the Shared Memory Routing function (2) is used to format cell packets, embedded within the TDMA bursts, in order to have the same format as signals coming from the Input Module (5) of the Chain 2. For instance, DVB-Standard EN300421 specifies the structure of TS packets which constitute DVB continuous streams. If the air interface of the forward path follows DVB-Standard EN300421 specifications, then the Formatting Module (3) has: 1). to encapsulate packets coming from the shared memory (2) within TS packets; 2). to generate the TS header; 3). to apply a Reed Solomon coding on the TS packets, with a coded rate equal to the one used for the forward path.
A Shared Memory Frame scheduler (4), coupled with the Shared Memory Routing Function (4), extracts frames according to a frame time plan and transmits them to the Routing Module (6) of the Chain 2 as defined in FR98 15708.

The Chain 2 has the following functions:

The Input Module (5) as defined in FR98 15708 receives TDM streams, demodulates, partially decodes them and sends them to the Routing Module (6). A buffering function may also be included within the Input Module (5).

The Routing Module (6), takes the frames from the Shared Memory Frame Scheduler (4) and generates a continuous stream of frames received from the Input Module (5) and transmits TDM streams to an Output Module (7).

The Output Module (7) codes, modulates and transmits the composite TDM frames generated by the Routing Module (6).

A TDMA controller receives bandwidth requests from the User Terminals and allocates bandwidth on the carriers received by the Multi-Frequency Receiver Module (1). The TDMA controller may be in the satellite or on the ground at a control centre or gateway. The payload can be used in conjunction with either conventional or carrier routing transponders to provide additional User Terminal to gateway connectivity, on the same satellite or co-located in the same orbital slot.

Payloads can be built with different numbers of carriers demodulated by the Multi-Frequency Receiver Module (1), different numbers of TDM streams received from gateways and different numbers of TDM streams transmitted to User Terminals. The default configuration has an equal number of uplink and downlink TDM streams and a total MF-TDMA capacity which is typically smaller than the TDM capacity.

User Terminals use the concept as follows:

For access to terrestrial content, operation is as in FR98 15708 The frame router is configured to provide capacity from each gateway beam to each downlink beam. The amount of capacity is determined by expected use and can vary with time. The User Terminal listens on a single TDM downlink and receives frames from many gateways. In a preferred implementation, the frames carry DVB formatted information and each gateway uses a separate PID to identify its data. This allows User Terminals to recognise streams of information which may be IP/MPE or ATM or otherwise encapsulated.

To send to a gateway (to request information or to supply information) a User Terminal tunes its transmitter to a carrier that will be received by the relevant gateway. It is allocated bandwidth on this carrier by its home gateway controller.

For User Terminal to User Terminal communications, a User Terminal can either utilize a double hop connection through a Gateway or a single hop connection through the mesh processor. The single hop connection reduces end-to-end time delay and occupies half the satellite bandwidth required for the double hop link.

To access a connection the User Terminal tunes its transmitter to a carrier that will be received by the on-board multi-frequency receivers (1). It is allocated bandwidth on this carrier by its home gateway, which must obtain the allocation from the controller either at the time of the request or by prior arrangement.

As in FR98 15708 each User Terminal has a home gateway which is responsible for allocating signalling bandwidth. When bandwidth is initially requested on the on-board processed carriers, the initial request must go to the home gateway which will relay the request to the on-board controller. Once bandwidth is allocated, requests can be used.

## Claims

1. A geostationary satellite communications system comprising a space segment having at least one satellite having a multi-beam telecommunications payload and a terrestrial segment comprising access gateways, each one being in the coverage of a beam or group of beams and user terminals having means connecting with the satellite payload, the payload comprising;
on an outward route, from a gateway to a user terminal, a routing device operating on a frame by frame basis for messages sent in time-division multiplex;
on a return route, from a user terminal to a gateway, a routing device, functioning on groups of carriers comprised in the same beam;
**characterised in that** the payload has three chains, wherein;
a first chain on the return route has a carrier router, routing on a group of carriers, signals multiplexed in frequency and time (MF/TDMA);
a second chain on the outward route has a frame router routing on a frame basis signals multiplexed in time (TDM);
a third chain arranged for connecting user terminals to user terminals through a single satellite loop, having a processing section receiving signals multiplexed in frequency and time (MF/TDMA) and generating signals multiplexed in time (TDM) therefrom and arranged to route these signals to the second chain.

2. A system as claimed in Claim 1, **characterised in that** the routing device on the return route is transparent.

3. A system as claimed in Claim 1 or 2, **characterised in that** there are means whereby the carriers at the input of the third chain from the user beams are rearranged by the first chain.

## Patentansprüche

1. Ein Synchronsateillten-Telekommunikationssystem, das ein Raumsegment, das mindestens einen Satelliten mit einer mehrstrahligen Telekommunikationsnutzlast aufweist, und ein terrestrisches Segment, das Zugangsüberleiteinrichtungen, von denen jede in der Bedeckung eines Strahls oder einer Gruppe von Strahlen liegt, und Benutzerstationen, die Mittel zum Verbinden mit der Satellitennutzlast aufweisen, beinhaltet, beinhaltet, wobei die Nutzlast Folgendes beinhaltet:
auf einer Outward-Route von einer Überleiteinrichtung zu einer Benutzerstation eine Routingvorrichtung, die auf einer Rahmen-um-Rahmen-Basis für Nachrichten, die in Zeitmultiplex gesendet werden, betrieben wird;
auf einer Rückkehrroute von einer Benutzerstation zu einer Überleiteinrichtung eine Routingvorrichtung, die auf Gruppen von Trägern funktioniert, die in demselben Strahl beinhaltet sind;
**dadurch gekennzeichnet, dass** die Nutzlast drei Ketten aufweist, wobei:
eine erste Kette auf der Rückkehrroute einen Trägerrouter aufweist, der auf einer Gruppe von Trägern in Frequenz und Zeit multiplexierte Signale (MF/TDMA) leitet;
eine zweite Kette auf der Outward-Route einen Rahmenrouter aufweist, der auf einer Rahmenbasis in der Zeit multiplexierte Signale (TDM) leitet;
eine dritte Kette, die angeordnet ist, um Benutzerstationen durch eine einzelne Satellitenschleife mit Benutzerstationen zu verbinden, die einen Verarbeitungsteilabschnitt aufweist, der in Frequenz und Zeit multiplexierte Signale (MF/TDMA) empfängt und daraus in Zeit multiplexierte Signale (TDM) erzeugt und angeordnet ist, um diese Signale an die zweite Kette zu leiten.

2. System gemäß Anspruch 1, **dadurch gekennzeichnet, dass** die Routingvorrlchtung auf der Rückkehrroute transparent ist.

3. System gemäß Anspruch 1 oder 2, **dadurch gekennzeichnet, dass** es Mittel gibt, wodurch die Träger am Eingang der dritten Kette von den Benutzerstrahlen durch die erste Kette neu angeordnet werden.

## Revendications

1. Un système de communications par satellite géostationnaire comprenant un secteur spatial qui présente au moins un satellite ayant une charge utile de télécommunications multi-faisceaux et un secteur terrestre qui comprend des passerelles d'accès, lesquelles se situent chacune dans la couverture d'un faisceau ou groupe de faisceaux et des terminaux utilisateurs présentant des moyens qui se raccordent à la charge utile du satellite, la charge utile comprenant :
sur une voie aller, allant d'une passerelle à un terminal utilisateur, un dispositif de routage opérant sur une base trame par trame pour des messages envoyés en multiplex temporel ;
sur une voie retour, allant d'un terminal utilisateur à une passerelle, un dispositif de routage, fonctionnant sur des groupes de porteuses comprises dans le même faisceau ;
**caractérisé en ce que** la charge utile présente trois chaînes, parmi lesquelles :
une première chaîne sur la vole retour présente un routeur de porteuses, routant sur un groupe de porteuses, des signaux à multiplexage en fréquence et dans le temps (MF/TDMA) ;
une deuxième chaîne sur la voie aller présente un routeur de trame routant sur une base de trame des signaux à multiplexage dans le temps (TDM) ;
une troisième chaîne arrangée pour connecter des terminaux utilisateurs à des terminaux utilisateurs par l'intermédiaire d'une seule boucle satellite, présentant une section de traitement qui reçoit des signaux à multiplexage en fréquence et dans le temps (MF/TDMA) et génère des signaux à multiplexage dans le temps (TDM) à partir de celle-ci et arrangée pour router ces signaux vers la deuxième chaîne.

2. Un système tel que revendiqué dans la revendication 1, **caractérisé en ce que** le dispositif de routage sur la voie retour est transparent.

3. Un système tel que revendiqué dans la revendication 1 ou 2, **caractérisé en ce qu'**il y a des moyens grâce auxquels les porteuses à l'entrée de la troisième chaîne provenant des faisceaux utilisateurs sont réarrangées par la première chaîne.
